# EUROPEAN PATENT SPECIFICATION

(11) **EP 4 220 250 B1**
(45) Date of publication and mention of the grant of the patent: **24.12.2025**
(21) Application number: 21881614.8
(22) Date of filing: 21.07.2021
(51) Int. Cl.: G02B 5/30, G02B 27/28, G02B 5/20

(54) **OPTICAL MODULE, BACKLIGHT CONTROL METHOD, AND DISPLAY DEVICE**
OPTISCHES MODUL, RÜCKBELEUCHTUNGSSTEUERUNGSVERFAHREN UND ANZEIGEVORRICHTUNG
MODULE OPTIQUE, PROCÉDÉ DE COMMANDE DE RÉTROÉCLAIRAGE ET DISPOSITIF D'AFFICHAGE

(30) Priority: 20.10.2020 CN 202011125198
(43) Date of publication of application: 02.08.2023
(73) Proprietor: Huawei Technologies Co., Ltd., Shenzhen, Guangdong 518129 (CN)
(72) Inventor: CHANG, Yiwen, Shenzhen, Guangdong 518129 (CN); ZHAO, Chenxiang, Shenzhen, Guangdong 518129 (CN); LIU, Kang Chung, Shenzhen, Guangdong 518129 (CN)
(74) Representative: Pfenning, Meinig & Partner mbB
(86) International application number: PCT/CN2021/107649
(87) International publication number: WO 2022/083194

(56) References cited:
- CN-A- 1 670 565
- CN-A- 103 383 493
- CN-A- 103 389 534
- CN-A- 105 229 499
- US-A1- 2012 188 467
- US-A1- 2013 286 479
- US-A1- 2013 301 126
- US-A1- 2014 285 878
- US-A1- 2015 247 617
- US-A1- 2015 247 617

## Description

### TECHNICAL FIELD

This application relates to the display field, and in particular, to an optical module, a backlight control method, a display apparatus and a vehicle.

### BACKGROUND

In a liquid crystal display apparatus, natural light generated by a backlight system needs to be converted into polarized light through modulation, to control deflection of transmitted light by using a liquid crystal layer in a liquid crystal panel. Usually, a polarizer is disposed between the liquid crystal panel and a backlight unit, so that natural light of the backlight unit is modulated into polarized light and then the polarized light is incident to the liquid crystal panel. However, because the polarizer absorbs polarized light in a different direction, at least 50% of light emitted by the backlight system is lost. This reduces efficiency of the backlight unit.

To improve utilization efficiency of a backlight source, some new optical film materials are developed in the industry, for example, a film material of a multi-layer film stacking design. Through this optical film material, light that is in a same polarization direction as the system can implement transmission, and light that is in a polarization direction different from a polarization direction of the system is reflected back to the backlight system. After a plurality of optical refractions and reflections, overall efficiency of the backlight system can be improved. Generally, system efficiency improvement brought by this optical film material is affected by a system architecture. In addition, an efficiency gain range of effective polarized light of the backlight system is between 20% and 45% based on a stacking architecture of a backlight optical film material, and impact of a material absorption rate and efficiency of a reflective substrate. In addition to the foregoing film material of the multi-layer film stacking design, a wire grid polarizer WGP (Wire Grid Polarizer) is also used to improve usage of polarized light. However, a manufacturing method of a structure of the wire grid polarizer is complex, a panel using a technology of the wire grid polarizer has poor display effect, and currently, there is no commercially-available mass production capacity and method in the industry. In addition, even if the problem of mass production of the technology is overcome, a problem similar to the problem of the foregoing film material of the multi-layer film stacking design still exists. That is, light reused by using the structure needs to return to the backlight system. In this case, efficiency is affected by a design of the backlight system, and efficiency improvement is limited.

It can be learned that currently, an optical module, a backlight control method, and a display apparatus are urgently needed to improve efficiency of a backlight unit and improve display effect of a liquid crystal panel.

US 2014/285878 A1 discloses a polarization conversion system, which includes a lens element, a polarization grating comprising a diffractive element having a spatially-varying local optical axis, and a retarder element. The polarization grating is arranged to receive light that is output from the lens element. The retarder element is arranged to receive polarized light of different polarization states that is output from the polarization grating and change each of the different polarization states to a same polarization state.

US 2013/301126 A1 discloses a polarization converter. The polarization converter includes a polarization grating with both left hand and right hand alignment domains. The polarization converter further includes a patterned quarter wave plate, which converts the output domains of left hand circular polarized light and right hand circular polarized light to linear polarized light.

US 2015/247617 A1 discloses a polarization converter capable of converting input light of any polarization state (including light in a non-polarized state) to output linear or circular polarized light. In the converter, light is incident on a patterned polarization grating. The patterned polarization grating is one-dimensionally patterned with both left hand polarization grating domains and right hand polarization grating domains. A patterned retarder converts the left hand and right hand circular polarized beams into uniform linear polarized or uniform circular polarized light based on the type/configuration of the domains of the patterned retarder.

US 2013/286479 A1 discloses a polarization recycling structure used to convert polarized light unavailable for a projector system into available polarized light. In the structure, unpolarized light enters into a polarized grating through a first lens array, then it is split into left handed circularly polarized light and right handed circularly polarized light. The left handed circularly polarized light and the right handed circularly polarized light are converted into first S-polarized light and second S-polarized light through a louvered multi-twist retarder C.

### SUMMARY

The invention is set out in the appended set of claims. Embodiments of this application provide an optical module, a backlight control method, and a display apparatus, so as to improve efficiency of effective polarized light of a backlight unit, implement local dimming (Local Dimming) of a liquid crystal display panel, and improve display effect.

According to a first aspect, an embodiment of this application provides an optical module, including:
a polarization film, configured to convert incident light into first polarized light having a first polarization state and second polarized light having a second polarization state; and
a phase delay layer, where the phase delay layer includes a control layer, the control layer includes one or more control elements, and the one or more control elements are configured to control the phase delay layer to convert the first polarized light and the second polarized light into third polarized light having a third polarization state and fourth polarized light having a fourth polarization state.

The first polarization state is different from the second polarization state.

According to the technical solution in this embodiment of this application, the phase delay layer actively controls polarized light in the optical module, so that efficiency of effective polarized light of a backlight unit can be improved and display effect of a liquid crystal panel can be improved. Further, because the efficiency of the effective polarized light of the backlight unit is improved, power consumption of the display apparatus is reduced.

According to a second aspect, an embodiment of this application provides a backlight control method, including:
enabling light incident to a polarization film, to obtain first polarized light having a first polarization state and second polarized light having a second polarization state; and
enabling the first polarized light and the second polarized light to be incident to a phase delay layer, to obtain third polarized light having a third polarization state and fourth polarized light having a fourth polarization state.

The first polarization state is different from the second polarization state.

The phase delay layer includes a control layer, and the control layer includes one or more control elements. The one or more control elements are configured to control the phase delay layer to convert the first polarized light and the second polarized light into the third polarized light and the fourth polarized light.

According to the technical solution in this embodiment of this application, the phase delay layer actively controls polarized light, so that usage of effective polarized light of a backlight unit can be improved, local dimming of a liquid crystal display panel can be implemented, and display effect is improved.

With reference to any one of the foregoing aspects or possible implementations, the polarization film includes at least one first region and at least one second region that are alternately arranged.

In the at least one first region, the incident light is converted into the first polarized light having a first emergent angle and the second polarized light having a second emergent angle.

In the at least one second region, the incident light is converted into first polarized light having a second emergent angle and second polarized light having a first emergent angle.

According to the technical solution in this embodiment of this application, efficiency of effective polarized light of a backlight unit can be improved, so that all incident non-polarized light is theoretically converted into polarized light, and a polarization direction and an emergent angle of emergent light are separated.

With reference to any one of the foregoing aspects or possible implementations, the first polarization state is a left-handed polarization state, and the second polarization state is a right-handed polarization state; or the first polarization state is a right-handed polarization state, and the second polarization state is a left-handed polarization state.

The phase delay layer includes at least one third region and at least one fourth region that are alternately arranged. The first polarized light is converted into the third polarized light in the at least one third region, and the second polarized light is converted into the fourth polarized light in the at least one fourth region.

According to the technical solution in this embodiment of this application, the phase delay layer actively controls incident polarized light in the optical module, so that usage of effective polarized light of a backlight unit can be improved, power consumption of a display apparatus is reduced, and display effect of a liquid crystal panel can be improved.

With reference to any one of the foregoing aspects or possible implementations, the third polarization state includes a linear polarization state or an elliptical polarization state, and the fourth polarization state includes a linear polarization state or an elliptical polarization state.

The at least one third region includes M third pixels in total, the at least one fourth region includes N fourth pixels in total, M is greater than or equal to a quantity of the at least one first region, and N is greater than or equal to a quantity of the at least one second region. It may be understood that both M and N are positive integers greater than or equal to 1.

The phase delay layer further includes a liquid crystal layer, and the liquid crystal layer includes one or more liquid crystal molecules. Each of the M third pixels includes at least one of the one or more liquid crystal molecules, and each of the N fourth pixels includes at least one of the one or more liquid crystal molecules.

The one or more control elements are configured to control deflection of the one or more liquid crystal molecules, so that the third polarized light and the fourth polarized light respectively include the third polarization state and the fourth polarization state.

According to the technical solution in this embodiment of this application, the phase delay layer actively controls incident polarized light in the optical module by the active control element of the phase delay layer, so that usage of effective polarized light of a backlight unit can be improved, power consumption of a display apparatus is reduced, a local dimming function can be implemented, and display effect of a liquid crystal panel can be improved.

With reference to any one of the foregoing aspects or possible implementations, the phase delay layer further includes an upper substrate and a lower substrate, and the liquid crystal layer is located between the upper substrate and the lower substrate.

With reference to any one of the foregoing aspects or possible implementations, the one or more control elements are thin film transistors TFTs (Thin Film Transistors). The TFT includes at least one of a α-Si-TFT, an LTPS-TFT, and an Oxide-TFT. The α-Si-TFT is an amorphous silicon (Amorphous Silicon) thin film transistor, the LTPS-TFT is a low temperature polycrystalline silicon (Low Temperature Polycrystalline Silicon) thin film transistor, and the Oxide-TFT is an oxide (Oxide) thin film transistor.

With reference to any one of the foregoing aspects or possible implementations, the phase delay layer is disposed close to an out-light side of the polarization film, and a distance d between an in-light side of the phase delay layer and the out-light side of the polarization film is associated with the first emergent angle or the second emergent angle.

With reference to any one of the foregoing aspects or possible implementations, the optical module is applied to a display apparatus, and the optical module is disposed between a display panel (Display Panel) and a backlight unit BLU (Backlight Unit) in the display apparatus.

With reference to any one of the foregoing aspects or possible implementations, the display panel may further include one or more of a color filter CF (Color Filter), an upper polarizer (Upper Polarizer), and a lower polarizer (Lower Polarizer).

With reference to any one of the foregoing aspects or possible implementations, the color filter CF in the display panel is disposed between the upper polarizer and the lower polarizer.

With reference to any one of the foregoing aspects or possible implementations, the display panel may be a liquid crystal display LCD (Liquid Crystal Display) panel.

With reference to any one of the foregoing aspects or possible implementations, the display panel may further include a front glass substrate (Glass Substrate), a rear glass substrate, and a liquid crystal layer located between the front glass substrate and the rear glass substrate.

With reference to any one of the foregoing aspects or possible implementations, the color filter CF on the display panel is located on a side that is of the front glass substrate and that is close to the liquid crystal layer.

With reference to any one of the foregoing aspects or possible implementations, the upper polarizer on the display panel is located on a side that is of the front glass substrate and that is away from the liquid crystal layer, and the lower polarizer is located on a side that is of the rear glass substrate and that is away from the liquid crystal layer.

It may be understood that light transmitted through the display panel is incident from the lower polarizer, and is emitted from the upper polarizer, and the lower polarizer or the upper polarizer only indicates a relative position of the upper polarizer or lower upper polarizer on the display panel, and does not constitute a limitation on a structure of the upper polarizer or the lower polarizer.

According to a third aspect, an embodiment of this application provides a display apparatus, including a display panel and the optical module according to the first aspect or the possible implementations.

With reference to any one of the foregoing aspects or possible implementations, the display apparatus further includes a backlight unit, and the optical module is disposed between the display panel and the backlight unit.

With reference to any one of the foregoing aspects or possible implementations, the display panel may further include one or more of an upper polarizer, a lower polarizer, a color filter CF, a front glass substrate, and a rear glass substrate. Optionally, the color filter CF is disposed between the upper polarizer and the lower polarizer.

According to a fourth aspect, an embodiment of this application provides a vehicle. The vehicle includes the display apparatus according to the third aspect or possible implementations.

According to the optical module, the backlight control method, and the display apparatus provided in embodiments of this application, usage of the effective polarized light of the backlight unit can be improved, local dimming of the liquid crystal display panel can be implemented, and the display effect is improved.

### BRIEF DESCRIPTION OF DRAWINGS

FIG. 1 is a schematic diagram of a structure of an optical module according to an embodiment of this application;
FIG. 2 is a schematic diagram of a structure of a polarization film according to an embodiment of this application;
FIG. 3 is a schematic diagram of a structure of a phase delay layer according to an embodiment of this application;
FIG. 4 is a schematic flowchart of a backlight control method according to an embodiment of this application;
FIG. 5 is a schematic diagram of a structure of a display apparatus according to an embodiment of this application;
FIG. 6 is a schematic diagram of a structure of an electronic device according to an embodiment of this application; and
FIG. 7 is a schematic diagram of a structure of a vehicle according to an embodiment of this application.

### DESCRIPTION OF EMBODIMENTS

The following further describes this application in detail with reference to the accompanying drawings and embodiments. It should be understood that the specific implementations described herein are merely used to explain this application, but are not intended to limit this application.

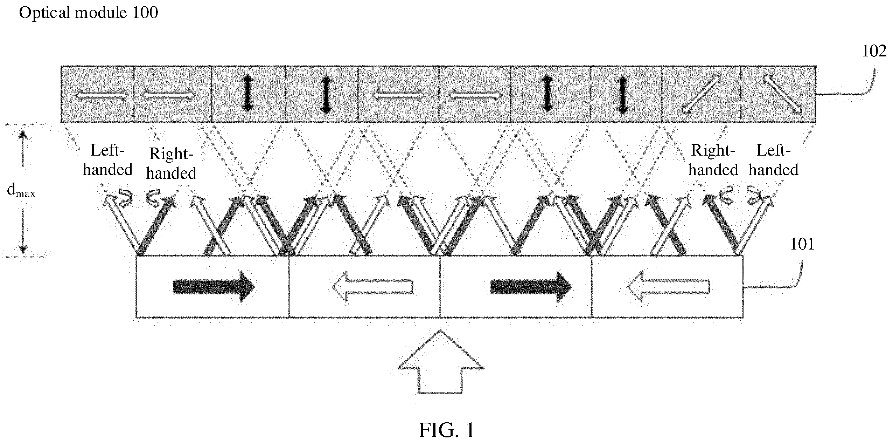

FIG. 1 is a schematic diagram of a structure of an optical module according to an embodiment of this application. The following describes the structure of the optical module 100.

The optical module 100 includes a polarization film 101.

In this embodiment of this application, an example in which the polarization film 101 has a polarization grating PG (Polarization Grating) structure is used for description. It may be understood that a type of the polarization film 101 is not limited to the PG structure, and may alternatively be another structure that can implement left-handed and right-handed polarized light separation and emergent angle separation for incident natural light. This is not limited in this application.

Specifically, the polarization film 101 is disposed on an out-light side of a backlight unit, so that emergent light of the backlight unit may be incident to an in-light side of the polarization film 101, and then is converted into first polarized light and second polarized light after passing through the polarization film 101.

In a specific example of the foregoing specific implementation, the first polarized light has a first polarization state, the second polarized light has a second polarization state, and the first polarization state is different from the second polarization state. For example, both the first polarized light and the second polarized light are circular polarized light, the first polarization state is a left-handed polarization state, and the second polarization state is a right-handed polarization state. Alternatively, both the first polarized light and the second polarized light are circular polarized light, the first polarization state is a right-handed polarization state, and the second polarization state is a left-handed polarization state. It may be understood that, when the first polarization state is different from the second polarization state, a specific type of the first polarization state or the second polarization state is not limited in this embodiment of this application. In this application, an example in which the first polarized light and the second polarized light are respectively circular polarized light having the left-handed polarization state or right-handed polarization state is used for description.

In another specific example of the foregoing specific implementation, the incident light of the polarization film 101 is non-polarized light. For example, the incident light may be natural light from the backlight unit, and the natural light may be considered as superposition of two beams of orthogonal circular polarized (Circular Polarized) light. It may be understood that, after a beam of light having the left-handed polarization state is incident to a polarization film having a proper PB (Pancharatnam-Berry) phase, emergent light having a deflection angle of θ and the right-handed polarization state may be obtained. On the contrary, after a beam of light having the right-handed polarization state is incident to a polarization film having a proper PB phase, emergent light having a deflection angle of -θ and the left-handed polarization state may be obtained. Further, after a beam of natural light is incident to the polarization film having the foregoing specific PB phase, right-handed polarized light emitted at the angle of θ and left-handed polarized light emitted at the angle of -θ may be obtained, so that separation of a polarization state and an emergent angle of the emergent light is implemented. It may be understood that, when the incident light is non-polarized light, the incident light of the polarization film 101 may be from the backlight unit or another backlight source. A specific source of the incident light is not limited in this embodiment of this application.

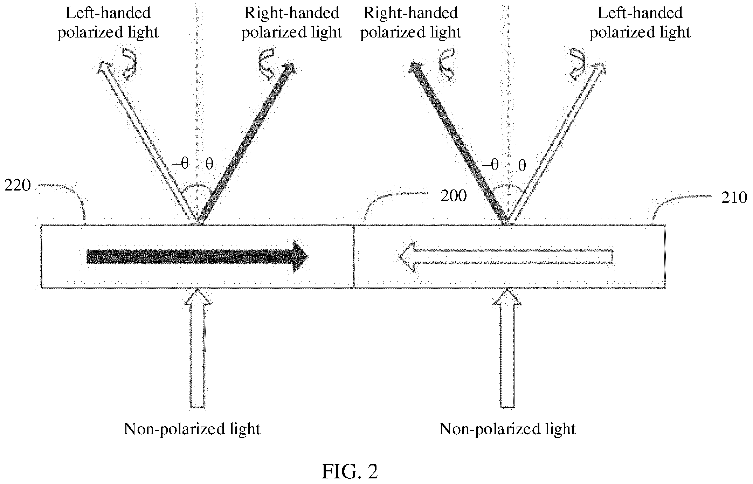

In another specific example of the foregoing specific implementation, the polarization film 101 includes at least one first region and at least one second region. In this embodiment of this application, a meaning of the at least one first region or the at least one first region indicates that: After incident light having a same PB phase and a same polarization state in the specific region of the polarization film 101, for example, natural light from the backlight unit, passes through the specific region, emergent light has a same polarization state separation state and emergent angle separation state. For structural descriptions of the first region and the second region in the polarization film 101, refer to specific content in the embodiment corresponding to FIG. 2 of this application. Details are not described herein again.

In another specific example of the foregoing specific implementation, the at least one first region and the at least one second region in the polarization film 101 are alternately arranged. For example, each of the at least one first region and each of the at least one second region in the polarization film 101 are arranged in a "... ABABAB..." manner, where A represents the first region, B represents the second region, and A and B form a repeated alternating arrangement. It may be understood that alternatively, the at least one first region and the at least one second region may be alternately arranged in another manner, to form a one-dimensional/linear alternating structure or a two-dimensional/planar alternating structure. This is not limited in this application. In this embodiment of this application, the "first region" and the "second region" have the same meanings as "each of the at least one first region" and "each of the at least one second region" respectively.

Further, under a condition that at least one first region and at least one second region that have opposite PB phases are alternately arranged, the first polarized light that has the left-handed polarization state and that is emitted from the first region at the angle of θ, and the first polarized light that has the left-handed polarization state and that is emitted from the second region adjacent to the polarization film 101 at the angle of -θ are converged at a specific distance d away from an emergent side of the polarization film 101.

In a specific example of the foregoing specific implementation, the first polarized light or the second polarized light is emitted from the first region and the second region in the polarization film 101 at a ±θ angle and intersects, to form planes with different degrees of intersection. It may be understood that the degree of intersection changes with the distance d between the intersection plane and the emergent side of the polarization film. For example, the first polarized light emitted from the first region and the second region that are adjacent to each other reaches a maximum degree of intersection at a location that is away from the emergent side of the polarization film 101 and that is at a distance of dₘₐₓ, and then the degree of intersection decreases. Similarly, a degree of intersection of the second polarized light emitted from the first region and the second region that are adjacent to each other has a same change rule: The degree of intersection reaches a maximum value at the location that is away from the emergent side of the polarization film 101 and that is at the distance of dₘₐₓ, and then decreases.

According to the technical solution in this embodiment of this application, after the non-polarized light emitted from the backlight unit is incident to the polarization film of the optical module, theoretically, all the non-polarized light may be converted into emergent polarized light that has the left-handed polarization state and the right-handed polarization state. This improves usage of effective polarized light of the backlight unit, reduces power consumption of a display apparatus, and improves display effect of a liquid crystal display panel.

The optical module 100 further includes a phase delay layer 102.

Specifically, the phase delay layer 102 is configured to convert the first polarized light having the first polarization state and the second polarized light having the second polarization state into third polarized light having a third polarization state and fourth polarized light having a fourth polarization state. For example, the first polarized light and the second polarized light are respectively circular polarized light having the left-handed polarization state or right-handed polarization state, and the third polarized light and the fourth polarized light include linear polarized light or elliptical polarized light.

In a specific example of the foregoing specific implementation, the phase delay layer 102 is disposed on an out-light side of the polarization film 101, and after incident light in a non-polarized state of the backlight unit is converted into the first polarized light having the left-handed polarization state and the second polarized light having the right-handed polarization state by using the polarization film 101, the incident light is incident to the phase delay layer 102, and is further converted into the third polarized light and the fourth polarized light. The third polarized light and the fourth polarized light may include linear polarized light having different polarization states. Alternatively, the third polarized light and the fourth polarized light may include elliptical polarized light having different polarization states. It may be understood that specific polarization states of the third polarization state and the fourth polarization state may be adjusted based on a control requirement of a display state of the liquid crystal display panel, and may be same or different polarization states. This is not limited in this embodiment of this application.

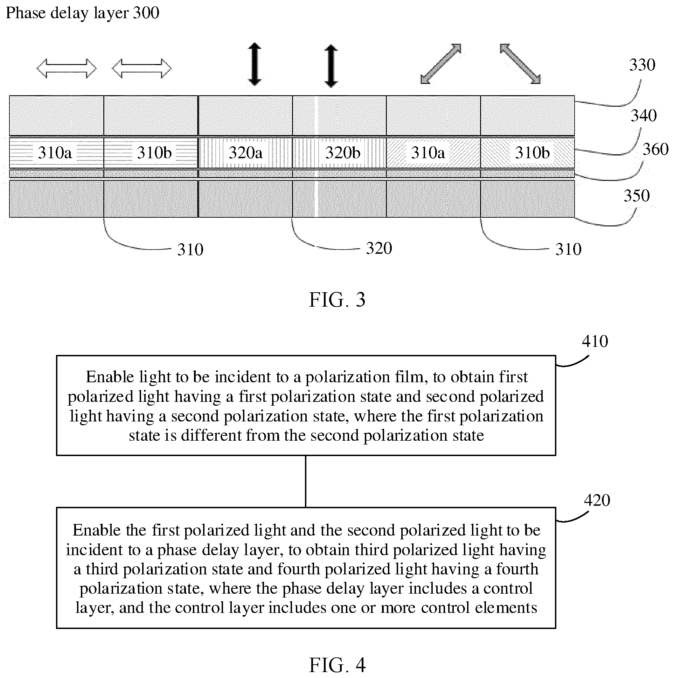

Further, the phase delay layer 102 includes at least one third region and at least one fourth region. In each of the at least one third region or each of the at least one fourth region, the first polarized light or the second polarized light incident to the phase delay layer 102 can be respectively converted into the third polarized light or the fourth polarized light. For specific structural descriptions of the third region and the fourth region in the phase delay layer 102, refer to specific content in the embodiment corresponding to FIG. 3 of this application. Details are not described herein again.

In a specific example of the foregoing specific implementation, the phase delay layer 102 may be disposed at a distance dₘₐₓ away from the emergent side of the polarization film 101, so that the first polarized light and the second polarized light that are emitted from the polarization film 101 can be incident to the phase delay layer 102 to a maximum extent. It may be understood that a location of the phase delay layer 102 may also be adjusted when a system design requirement and a function control requirement of the display panel are met. A relative position of the polarization film 101 relative to the phase delay layer 102 is not specifically limited in this embodiment of this application.

According to the technical solution in this embodiment of this application, the phase delay layer 102 may convert the incident first polarized light and second polarized light to a maximum extent, so that usage of effective polarized light of the backlight unit is improved, power consumption of the display apparatus is reduced, and the display effect of the liquid crystal panel is improved.

In another specific example of the foregoing specific implementation, the emergent light of the phase delay layer 102 enters a lower polarizer of the liquid crystal display panel, and the polarization states of the third polarized light and the fourth polarized light are adjusted, so that the display effect of the liquid crystal display panel can be controlled. For example, the third polarized light and the fourth polarized light may be linear polarized light. By adjusting directions of third polarized light transmitted by at least one third pixel, fourth polarized light transmitted by at least one fourth pixel, and a light transmission axis of the lower polarizer, efficiency of the backlight unit and the display effect of the liquid crystal panel may be controlled.

In an implementation of the foregoing embodiment, when a displayed picture is in a white field, the polarization direction of the third polarized light transmitted by the at least one third pixel is adjusted, so that the polarization direction is parallel to the direction of the light transmission axis of the lower polarizer. In this case, more polarized light can be transmitted to obtain higher white field brightness.

In another implementation of the foregoing embodiment, when the displayed picture is in a dark field, the polarization direction of the third polarized light and/or the fourth polarized light is adjusted to be perpendicular to the direction of the light transmission axis of the lower polarizer, so as to enhance dark field effect.

In still another implementation of the foregoing embodiment, a polarization film can be actively controlled in regions to generate a non-orthogonal included angle between the polarization direction of the polarized light and the lower polarizer, so as to increase a gray-scale performance value of the panel. In this way, amount of transmitted light is adjusted.

According to the optical module in this embodiment of this application, incident light can be converted into polarized light having different polarization states and emergent angles by using a polarization film. Theoretical conversion efficiency is close to 100%, which significantly improves usage of effective polarized light of the backlight unit, and can reduce power consumption of the display apparatus. The phase delay layer in the optical module includes alternately arranged phase delay regions (for example, the third region and the fourth region). Pixel-level active control is performed on incident polarized light having different polarization states, and local dimming (Local Dimming) is performed based on a display requirement of the display panel, so that a high dynamic range HDR (high dynamic range) image can be obtained. This improves the display effect of the panel.

FIG. 2 is a schematic diagram of a structure of a polarization film according to an embodiment of this application. The following specifically describes the structure of the polarization film 200 (that is, the polarization film 101 in FIG. 1, where in this embodiment of this application, unless otherwise specified, the polarization film 101 and the polarization film 200 have a same meaning). The polarization film 200 includes a first region 210 and a second region 220. The first region 210 and the second region 220 have opposite PB phases. It may be understood that the polarization film 200 may alternatively include a plurality of first regions 210 and a plurality of second regions 220, and the plurality of first regions 210 and the plurality of second regions 220 are alternately arranged.

Specifically, incident light incident to the first region 210 of the polarization film is converted into first polarized light having a first emergent angle and second polarized light having a second emergent angle, and the incident light incident to the second region 220 of the polarization film is converted into first polarized light having a second emergent angle and second polarized light having a first emergent angle.

In a specific example of the foregoing specific implementation, the incident light in a non-polarization state is converted into left-handed polarized light having a first emergent angle of θ and right-handed polarized light having a second emergent angle of -θ in the first region 210, and is converted into left-handed polarized light having a second emergent angle of -θ and right-handed polarized light having a first emergent angle of θ in the second region 220. It may be understood that, for the polarization film 200 having a polarization grating PG structure, a PB phase of the first region 210 or the second region 220 is associated with a polarization grating PG structure of the specific region. For example, the at least one first region 210 has a same first PG structure, and the at least one second region 220 also has a same second PG structure. The first emergent angle and the second emergent angle are associated with a wavelength of the incident light and a pitch of the first region and the second region. Specific ranges of the first emergent angle and the second emergent angle are not limited in this embodiment of this application.

According to the technical solutions in embodiments of this application, all incident non-polarized light is theoretically converted into polarized light, and separation of a polarization direction and an emergent angle of the emergent light is implemented, so that usage of effective polarized light of a backlight unit can be improved, and power consumption of a display apparatus is reduced.

FIG. 3 is a schematic diagram of a structure of a phase delay layer according to an embodiment of this application. The following specifically describes the structure of the phase delay layer 300 (that is, the phase delay layer 102 in FIG. 1, where in this embodiment of this application, unless otherwise specified, the phase delay layer 300 and the phase delay layer 102 have a same meaning). The phase delay layer 300 includes a third region 310 and a fourth region 320, and the third region 310 and the fourth region 320 are alternately arranged. Optionally, the phase delay layer 300 may alternatively include a plurality of third regions 310 and a plurality of fourth regions 320, and the plurality of third regions 310 and the plurality of fourth regions 320 are alternately arranged. It may be understood that an alternate arrangement implementation of the third region 310 and the fourth region 320 may be linear/one-dimensional alternating arrangement, or may be planar/two-dimensional alternating arrangement. This is not limited in this application.

In this embodiment of this application, the "third region" and the "fourth region" have the same meanings as "each of the at least one third region" and "each of the at least one fourth region" respectively. A meaning of the third region 310 or the fourth region 320 indicates that incident light in the specific region in the phase delay layer has at least a same polarization state. For example, the first polarized light is incident to the third region 310 of the phase delay layer 300, and the second polarized light is incident to the fourth region 320 of the phase delay layer 300. It may be understood that, the third region 310 and the fourth region 320 only indicate incident regions of the first polarized light and the second polarized light at the phase delay layer 102, and a phase delay state generated by the third region 310 and the fourth region 320 for the incident light may be adjusted based on a control requirement of the display panel. This is not limited in this embodiment of this application.

In another specific example of the foregoing specific implementation, a structure of the phase delay layer 300 includes a lower substrate 350, an upper substrate 330, a liquid crystal layer 340, and a control layer 360. The lower substrate 350 is disposed on an in-light side of the phase delay layer 300, and the upper substrate 330 is disposed on an out-light side of the phase delay layer 300. Further, the liquid crystal layer 340 is located between the lower substrate 350 and the upper substrate 330, and the control layer 360 is located between the liquid crystal layer 340 and the lower substrate 350. Optionally, the control layer 360 is disposed on a surface on a side that is of the lower substrate 350 and that is close to the liquid crystal layer 340, and forms an integrated structure. It may be understood that the upper substrate 330 and the lower substrate 350 only indicate relative positions of the upper substrate 330 and the lower substrate 350, and one of the upper substrate 330 and the lower substrate 350 may be selected as the in-light side or the out-light side based on design requirements of an optical module and a display panel. This is not limited in this embodiment of this application.

In an implementation of the foregoing embodiment, materials of the lower substrate 350 and the upper substrate 330 may be selected from glass, a polymer material, or an organic-inorganic composite material. For example, the lower substrate 350 and the upper substrate 330 may include a liquid crystal glass substrate (glass substrate), especially an alkali-free glass substrate. Alternatively, both the lower substrate 350 and the upper substrate 330 include a polymer film material having good light transmission and mechanical properties, for example, at least one of a polyimide PI (polyimide) film, a polycarbonate (polycarbonate) film, a polypropylene PP (polypropylene) film, and a polyethylene PE (polyethylene) film. Alternatively, the upper substrate 330 and the lower substrate 350 include different materials. For example, the lower substrate 350 includes a glass substrate, and the upper substrate 330 includes a transparent polymer material; or the lower substrate 350 includes a transparent polymer material, and the upper substrate 330 includes a glass substrate. Further, a thickness of the lower substrate 350 and/or the upper substrate 330 need to be controlled, to meet requirements of the display apparatus on thickness, weight, and the like. For example, the upper substrate 330 or the lower substrate 350 is less than 1 mm (millimeter). For example, a total thickness of the lower substrate 350 and the upper substrate 330 does not exceed 1 mm. For example, the total thickness of the lower substrate and the upper substrate does not exceed 0.5 mm.

In still another implementation of the foregoing embodiment, the liquid crystal layer 340 between the lower substrate 350 and the upper substrate 330 includes a plurality of liquid crystal molecules configured to convert incident first polarized light and/or second polarized light into emergent third polarized light and/or fourth polarized light. For example, the first polarized light is left-handed polarized light, and the second polarized light is right-handed polarized light. After the liquid crystal layer 340 enables the first polarized light to generate a 1/4λ phase delay, and enables the right-handed polarized light to generate a 3/4λ phase delay, the emergent third polarized light and/or the emergent fourth polarized light have/has a same linear polarization direction. It can be understood that, for circular polarized light, after the left-handed polarized light generates a (1/4+k)λ phase delay and the right-handed polarized light generates a (3/4+k)λ phase delay, or the left-handed polarized light generates a (3/4+k)λ phase delay and the right-handed polarized light generates a (1/4+k)λ phase delay (k is an integer), linear polarized light having a same polarization state is obtained. The left-handed polarized light or the right-handed polarized light is converted into emergent light having an elliptical polarized state within a phase delay range of (1/4+k)λ to (3/4+k)λ. It may be understood that the polarization state of the third polarized light and/or the fourth polarized light may be another polarization state. This is not limited in this embodiment of this application.

In the phase delay layer 300, the at least one third region 310 includes M third pixels in total, the at least one fourth region 320 includes N fourth pixels in total, and both M and N are positive integers greater than or equal to 1. M is greater than or equal to a quantity of third regions 310, and N is greater than or equal to a quantity of fourth regions 320. Further, the phase delay layer 300 includes a liquid crystal layer 340, and the liquid crystal layer 340 includes one or more liquid crystal molecules. Each of the M third pixels includes at least one of the one or more liquid crystal molecules, and each of the N fourth pixels includes at least one of the one or more liquid crystal molecules. Further, in this embodiment of this application, each of the M third pixels or the N fourth pixels may be considered as a minimum repetition unit that can be independently controlled in the phase delay layer 300 by using a control element. A deflection state of at least one liquid crystal molecule in each pixel may be independently and actively controlled, to obtain emergent light having a specific polarization state.

In another specific example of the foregoing specific implementation, the third region 310 includes a third pixel 310a and a third pixel 310b, and the fourth region 320 includes a fourth pixel 320a and a fourth pixel 320b. A quantity of third pixels 310a and a quantity of third pixels 310b are M, and a quantity of fourth pixels 320a and a quantity of fourth pixels 320b are N. It may be understood that quantities of pixels included in the third region 310 or the fourth region 320 may be the same or may be different. A quantity of pixels in a specific region is not limited in this embodiment of this application.

In another specific example of the foregoing specific implementation, each of the third pixel 310a, the third pixel 310b, the fourth pixel 320a, and the fourth pixel 320b may be independently controlled by using a control element, so that one or more liquid crystal molecules included in the pixel generate specific deflection, and the first polarized light or the second polarized light incident to the pixel generates a specific phase delay, to obtain third polarized light having a third polarization state or fourth polarized light having a fourth polarization state.

The control layer 360 includes one or more control elements (not shown in FIG. 3). The one or more control elements are configured to control deflection of one or more liquid crystal molecules in the liquid crystal layer 340, so that each of first polarized light and second polarized light incident to the phase delay layer 300 generates a corresponding phase delay, to obtain third polarized light having a third polarization state and fourth polarized light having a fourth polarization state. Optionally, the one or more control elements may be thin film transistors TFTs. For example, the thin film transistor TFT may be at least one of an amorphous silicon α-Si-TFT, a low temperature polycrystalline silicon LTPS-TFT, or an oxide Oxide-TFT. A type of the thin film transistor is not limited in this embodiment of this application.

FIG. 4 is a schematic flowchart of a backlight control method according to an embodiment of this application. The following specifically describes the method.

Step 410: Enable light to be incident to a polarization film, to obtain first polarized light having a first polarization state and second polarized light having a second polarization state, where the first polarization state is different from the second polarization state.

Specifically, the polarization film includes at least one first region and at least one second region that are alternately arranged. The incident light is converted, in the at least one first region, into first polarized light having a first emergent angle and second polarized light having a second emergent angle. The incident light is converted, in the at least one second region, into first polarized light having the second emergent angle and second polarized light having the first emergent angle.

In another specific example of the foregoing specific implementation, the first polarization state is a left-handed polarization state, and the second polarization state is a right-handed polarization state. Alternatively, the first polarization state is a right-handed polarization state, and the second polarization state is a left-handed polarization state.

For ease and brevity of description, for a specific description in this embodiment, refer to the description in the embodiment corresponding to FIG. 1. Details are not described herein again.

Step 420: Enable the first polarized light and the second polarized light to be incident to a phase delay layer, to obtain third polarized light having a third polarization state and fourth polarized light having a fourth polarization state.

Specially, the phase delay layer includes a control layer, and the control layer includes one or more control elements. The one or more control elements are configured to control the phase delay layer to convert the first polarized light and the second polarized light into the third polarized light and the fourth polarized light.

Specifically, the phase delay layer includes at least one third region and at least one fourth region that are alternately arranged. The first polarized light is converted into the third polarized light in the at least one third region, the second polarized light is converted into the fourth polarized light in the at least one fourth region, the third polarization state includes a linear polarization state or an elliptical polarization state, and the fourth polarization state may include a linear polarization or an elliptical polarization state.

In another specific example of the foregoing specific implementation, the phase delay layer is disposed close to an out-light side of the polarization film, and a distance d between an in-light side of the phase delay layer and the out-light side of the polarization film is associated with the first emergent angle or the second emergent angle. The at least one third region includes M third pixels in total, the at least one fourth region includes N fourth pixels in total, M is greater than or equal to a quantity of the at least one first region, and N is greater than or equal to a quantity of the at least one second region.

Specifically, the phase delay layer includes a liquid crystal layer, and the liquid crystal layer includes one or more liquid crystal molecules. Each of the M third pixels includes at least one of the one or more liquid crystal molecules, and each of the N fourth pixels includes at least one of the one or more liquid crystal molecules. The one or more control elements are configured to control deflection of the one or more liquid crystal molecules, so that the third polarized light and the fourth polarized light have a third polarization state and a fourth polarization state respectively.

For ease and brevity of description, for a specific description in this embodiment, refer to the description in the embodiment corresponding to FIG. 1. Details are not described herein again.

According to the backlight control method in this embodiment of this application, on one hand, the incident light is converted, by using a polarization film, into polarized light having different polarization states and emergent angles. Compared with a conventional polarized light conversion method, this method significantly improves usage of effective polarized light of a backlight unit, and can further reduce power consumption of a display apparatus. On the other hand, the phase delay layer in the optical module actively controls incident polarized light, thereby improving display effect of the panel.

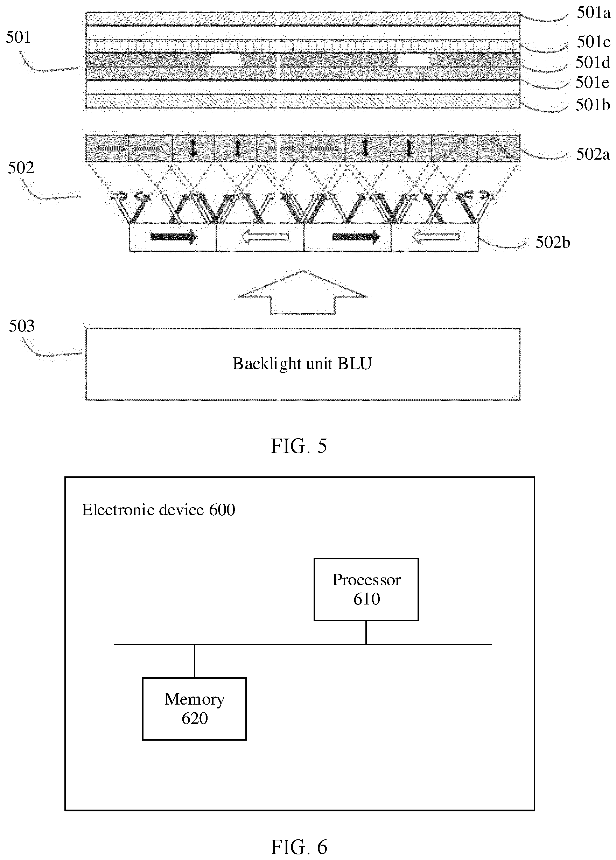

FIG. 5 is a schematic diagram of a display apparatus according to an embodiment of this application. The display apparatus 500 includes a display panel 501. an optical module 502 (namely, the optical module 100 in FIG. 1), and a backlight unit 503. It may be understood that the display apparatus 500 may further include another structure and component. This is not limited in this embodiment of this application.

Specifically, the display panel 501 includes one or more of an upper polarizer 501a, a lower polarizer 501b, a color filter 501c, a liquid crystal layer 501d, and a control layer 501e. The upper polarizer 501a and the lower polarizer 501b are respectively disposed on an out-light side and an in-light side of the display panel 501. It may be understood that the display panel 501 may further include another component and structure. This is not limited in this application.

In a specific example of the foregoing specific implementation, the upper polarizer 501a may be configured to control light incident to the display panel 501 to be polarized light. The lower polarizer 501b may be configured to control a light emission amount of emergent polarized light transmitted by the liquid crystal layer 501d, and cooperate with the color filter 501c to control a color and brightness of the display panel. For example, the color filter 501c may include a structure in which red R, green G, and blue B sub-pixels are alternately arranged, and different colors are displayed by controlling a light emission amount of each sub-pixel. It may be understood that the color filter 501c may include another type of sub-pixel and another type of arrangement manner. This is not limited in this embodiment of this application.

In another specific example of the foregoing specific implementation, the color filter 501c is disposed between the upper polarizer 501a and lower polarizer 501b. Further, the color filter 501c is disposed on an out-light side of the liquid crystal layer 501d, so that a polarization state of polarized light incident to the color filter 501c can be controlled, and display effect of a liquid crystal panel can be controlled.

The optical module 502 in the display apparatus 500 is disposed between the display panel 501 and the backlight unit 503, so that emergent light of the backlight unit 503 can be converted into polarized light. For a description of the optical module 502, refer to specific content in the embodiment corresponding to FIG. 2 of this application. Details are not described herein again.

The backlight unit 503 may include one or more of a light source, a diffusion film, a brightness enhancement film, and a light guide plate. A type and a structure of the backlight unit 503 are not limited in this embodiment of this application.

FIG. 6 is a schematic diagram of a structure of an electronic device 600 according to an embodiment of this application.

A processor 610 is configured to execute a computer program stored in a memory 620, to implement the backlight control method provided in the embodiment shown in FIG. 4 of this application. Optionally, the memory 620 is coupled to the processor 610.

The processor 610 may be one or more processors, and this is not limited in this embodiment of this application.

Optionally, the electronic device 600 may further include the memory 620, and the memory 620 stores a computer program.

In addition, an embodiment of this application further provides an apparatus. The apparatus includes a functional module for implementing the backlight control method provided in the embodiment shown in FIG. 4 of this application. The functional module may be implemented by a processor, or may be jointly implemented by a processor and a memory.

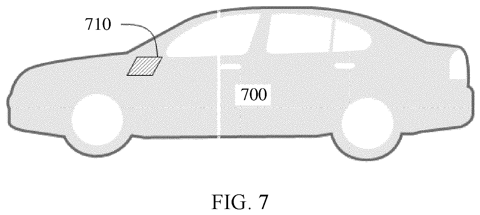

FIG. 7 is a schematic diagram of a structure of a vehicle according to an embodiment of this application. A vehicle 700 includes a display apparatus 710. It may be understood that the display apparatus 710 is the display apparatus 500 provided in the embodiment shown in FIG. 5 of this application.

It may be understood that the "vehicle" or another similar term in embodiments of this application includes a general motor vehicle, for example, a car, an SUV, an MPV, a bus, a truck, and another cargo or passenger vehicle, water crafts including various ships and boats, an aircraft, and the like, including a hybrid vehicle, an electric vehicle, a fuel vehicle, a plug-in hybrid electric vehicle, a fuel cell vehicle, and another alternative fuel vehicle. The hybrid power vehicle is a vehicle having two or more power sources. The electric vehicle includes a pure electric vehicle, an extended-range electric vehicle, and the like. A type of the vehicle is not specifically limited in this embodiment of this application.

An embodiment of this application provides a computer-readable storage medium. The computer-readable storage medium stores a computer program. When the computer program is executed by a processor, the method provided in the embodiment shown in FIG. 4 of this application is implemented.

Terms used in specific implementations of embodiments of this application are merely used to explain specific implementations of this application, and are not intended to limit this application.

It should be noted that, to clearly describe the technical solutions in embodiments of this application, terms such as "first" and "second" are used in embodiments of this application to distinguish between same items or similar items that have basically same functions and purposes. For example, the first region and the second region are used for only distinguishing types of different polarization regions, unless otherwise clearly specified and limited, a sequence of the regions is not limited, and cannot be understood as an indication or implication. A person skilled in the art may understand that the terms such as "first" and "second" do not limit a number or an execution sequence.

A person skilled in the art can appreciate that functions described with reference to various illustrative logical blocks, modules, and algorithm steps disclosed and described herein may be implemented by hardware, software, firmware, or any combination thereof. If implemented by software, the functions described with reference to the illustrative logical blocks, modules, and steps may be stored in or transmitted over a computer-readable medium as one or more instructions or code and executed by a hardware-based processing unit. The computer-readable medium may include a computer-readable storage medium, which corresponds to a tangible medium such as a data storage medium, or may include any communication medium that facilitates transmission of a computer program from one place to another (for example, according to a communication protocol). In this manner, the computer-readable medium may generally correspond to: (1) a non-transitory tangible computer-readable storage medium, or (2) a communication medium such as a signal or a carrier. The data storage medium may be any available medium that can be accessed by one or more computers or one or more processors to retrieve an instruction, code and/or a data structure for implementation of a technology described in this application. A computer program product may include a computer readable medium.

By way of example and not limitation, such computer-readable storage media may include a RAM, a ROM, an EEPROM, a CD-ROM or another optical disc storage apparatus, a magnetic disk storage apparatus or another magnetic storage apparatus, a flash memory, or any other medium that can store required program code in a form of an instruction or a data structure and that can be accessed by a computer. In addition, any connection is properly referred to as a computer-readable medium. For example, if an instruction is transmitted from a website, a server, or another remote source through a coaxial cable, an optical fiber, a twisted pair, a DSL, or a wireless technology such as infrared, radio, or microwave, the coaxial cable, the optical fiber, the twisted pair, the DSL, or the wireless technology such as infrared, radio, or microwave is included in a definition of the medium. However, it should be understood that the computer-readable storage medium and the data storage medium do not include connections, carriers, signals, or other transitory media, but actually mean non-transitory tangible storage media. Disks and discs used in this specification include a compact disc (CD), a laser disc, an optical disc, a digital versatile disc (DVD), and a Blu-ray disc. The disks usually reproduce data magnetically, whereas the discs reproduce data optically by using lasers. Combinations of the above should also be included within the scope of computer-readable media.

An instruction may be executed by one or more processors such as one or more digital signal processors (DSPs), a general microprocessor, an application-specific integrated circuit (ASIC), a field programmable gate array (FPGA), or another equivalent integrated circuit or discrete logic circuit. Therefore, the term "processor" used in this specification may refer to the foregoing structure, or any other structure that may be applied to implementation of the technologies described in this specification. In addition, in some aspects, the technology may be fully implemented in one or more circuits or logic elements.

The technologies in this application may be implemented in various apparatuses or devices, including an in-vehicle device, an integrated circuit (IC), or a set of ICs (for example, a chip set). Various components, modules, or units are described in this application to emphasize functional aspects of apparatuses configured to perform the disclosed techniques, but do not necessarily require realization by different hardware. Actually, as described above, various modules may be combined in hardware in combination with suitable software and/or firmware, or may be provided by interoperable hardware (including one or more processors described above).

In the foregoing embodiments, the description of each embodiment has respective focuses. For a part that is not described in detail in an embodiment, refer to related descriptions in other embodiments.

The foregoing descriptions are merely specific implementations of this application. The imvention is defined by the appended claims.

## Claims

1. An optical module, comprising:
a polarization film (101, 200), configured to convert incident light into first polarized light having a first polarization state and second polarized light having a second polarization state; wherein the polarisation film (101, 200) comprises at least one first region (210) and at least one second region (220) that are alternately arranged; and
a phase delay layer (102, 300), wherein the phase delay layer (102, 300) comprises a control layer (360), the control layer (360) comprises one or more control elements, and the one or more control elements are configured to control the phase delay layer (102, 300) to convert the first polarized light and the second polarized light into third polarized light having a third polarization state and fourth polarized light having a fourth polarization state, wherein
the first polarization state is different from the second polarization state,
wherein the phase delay layer (102, 300) comprises at least one third region (310) and at least one fourth region (320) that are alternately arranged, and that the first polarized light and the second polarized light are converted into third polarized light having a third polarization state and fourth polarized light having a fourth polarization state comprises:
the first polarized light is converted into the third polarized light in the at least one third region (310); and
the second polarized light is converted into the fourth polarized light in the at least one fourth region (320),
wherein the at least one third region (310) comprises M third pixels in total, the at least one fourth region (320) comprises N fourth pixels in total, M is greater than or equal to a quantity of the at least one first region (210), and N is greater than or equal to a quantity of the at least one second region (220),
wherein the phase delay layer further comprises a liquid crystal layer (340), the liquid crystal layer (340) comprises one or more liquid crystal molecules, each of the M third pixels comprises at least one of the one or more liquid crystal molecules, and each of the N fourth pixels comprises at least one of the one or more liquid crystal molecules, and
wherein the one or more control elements are configured to control deflection of the one or more liquid crystal molecules, so that the third polarized light and the fourth polarized light respectively comprise the third polarization state and the fourth polarization state.

2. The module according to claim 1, wherein the polarization film (101, 200) comprises at least one first region (210) and at least one second region (220) that are alternately arranged;
in the at least one first region (210), the incident light is converted into the first polarized light having a first emergent angle and the second polarized light having a second emergent angle; and
in the at least one second region (220), the incident light is converted into the first polarized light having the second emergent angle and the second polarized light having the first emergent angle.

3. The module according to claim 1 or 2, wherein the first polarization state is a left-handed polarization state, and the second polarization state is a right-handed polarization state; or the first polarization state is a right-handed polarization state, and the second polarization state is a left-handed polarization state.

4. The module according to any one of claims 1 to 3, wherein the third polarization state comprises a linear polarization state or an elliptical polarization state, and the fourth polarization state comprises the linear polarization state or the elliptical polarization state.

5. The module according to any of claims 1 to 4, wherein the phase delay layer further comprises an upper substrate (330) and a lower substrate (350), and the liquid crystal layer (340) is located between the upper substrate (330) and the lower substrate (350),

6. The module according to any one of claims 1 to 5, wherein the one or more control elements are thin film transistors TFTs, and the TFT comprises at least one of an amorphous silicon α-Si-TFT, a low-temperature polycrystalline silicon LTPS-TFT, and an oxide Oxide-TFT.

7. The module according to any one of claims 1 to 6, wherein the phase delay layer is disposed close to an out-light side of the polarization film, and a distance d between an in-light side of the phase delay layer and the out-light side of the polarization film is associated with the first emergent angle or the second emergent angle.

8. The module according to any one of claims 1 to 7, wherein the module is applied to a display apparatus, and is disposed between a display panel and a backlight unit in the display apparatus.

9. The module according to claim 8, wherein the display panel further comprises one or more of a color filter CF, an upper polarizer, and a lower polarizer.

10. A backlight control method, comprising:
enabling (410), light incident to a polarization film, to obtain first polarized light having a first polarization state and second polarized light having a second polarization state; wherein the polarisation film (101, 200) comprises at least one first region (210) and at least one second region (220) that are alternately arranged; and
enabling (420), the first polarized light and the second polarized light to be incident to a phase delay layer, to obtain third polarized light having a third polarization state and fourth polarized light having a fourth polarization state, wherein
the first polarization state is different from the second polarization state; and
the phase delay layer comprises a control layer, and the control layer comprises one or more control elements, wherein the one or more control elements are configured to control the phase delay layer to convert the first polarized light and the second polarized light into the third polarized light and the fourth polarized light,
wherein the phase delay layer comprises at least one third region and at least one fourth region that are alternately arranged, and that the first polarized light and the second polarized light are converted into third polarized light having a third polarization state and fourth polarized light having a fourth polarization state comprises:
the first polarized light is converted into the third polarized light in the at least one third region; and
the second polarized light is converted into the fourth polarized light in the at least one fourth region,
wherein the at least one third region comprises M third pixels in total, the at least one fourth region comprises N fourth pixels in total, M is greater than or equal to a quantity of the at least one first region, and N is greater than or equal to a quantity of the at least one second region,
wherein the phase delay layer further comprises a liquid crystal layer, the liquid crystal layer comprises one or more liquid crystal molecules, each of the M third pixels comprises at least one of the one or more liquid crystal molecules, and each of the N fourth pixels comprises at least one of the one or more liquid crystal molecules, and
wherein the one or more control elements are configured to control deflection of the one or more liquid crystal molecules, so that the third polarized light and the fourth polarized light respectively comprise the third polarization state and the fourth polarization state.

11. The method according to claim 10, wherein the polarization film comprises at least one first region and at least one second region that are alternately arranged;
in the at least one first region, the incident light is converted into the first polarized light having a first emergent angle and the second polarized light having a second emergent angle; and
in the at least one second region, the incident light is converted into the first polarized light having the second emergent angle and the second polarized light having the first emergent angle.

12. The method according to claim 10 or 11, wherein the first polarization state is a left-handed polarization state, and the second polarization state is a right-handed polarization state; or the first polarization state is a right-handed polarization state, and the second polarization state is a left-handed polarization state.

13. The method according to any of claims 10 to 12, wherein the phase delay layer further comprises an upper substrate and a lower substrate, and the liquid crystal layer is located between the upper substrate and the lower substrate.

14. A display apparatus, wherein the display apparatus comprises a display panel and the optical module according to any one of claims 1 to 9.

15. A vehicle, wherein the vehicle comprises the display apparatus according to claim 14.

## Patentansprüche

1. Optisches Modul, umfassend:
einen Polarisationsfilm (101, 200), der dazu konfiguriert ist, einfallendes Licht in ein erstes polarisiertes Licht, das einen ersten Polarisationszustand aufweist, und ein zweites polarisiertes Licht, das einen zweiten Polarisationszustand aufweist, umzuwandeln; wobei der Polarisationsfilm (101, 200) mindestens einen ersten Bereich (210) und mindestens einen zweiten Bereich (220) umfasst, die abwechselnd angeordnet sind; und
eine Phasenverzögerungsschicht (102, 300), wobei die Phasenverzögerungsschicht (102, 300) eine Steuerungsschicht (360) umfasst, die Steuerungsschicht (360) ein oder mehrere Steuerungselemente umfasst und das eine oder die mehreren Steuerungselemente dazu konfiguriert sind, die Phasenverzögerungsschicht (102, 300) zu steuern, um das erste polarisierte Licht und das zweite polarisierte Licht in ein drittes polarisiertes Licht, das einen dritten Polarisationszustand aufweist, und ein viertes polarisiertes Licht, das einen vierten Polarisationszustand aufweist, umzuwandeln, wobei
sich der erste Polarisationszustand von dem zweiten Polarisationszustand unterscheidet,
wobei die Phasenverzögerungsschicht (102, 300) mindestens einen dritten Bereich (310) und mindestens einen vierten Bereich (320) umfasst, die abwechselnd angeordnet sind, und der Umstand, dass das erste polarisierte Licht und das zweite polarisierte Licht in ein drittes polarisiertes Licht, das einen dritten Polarisationszustand aufweist, und ein viertes polarisiertes Licht, das einen vierten Polarisationszustand aufweist, umgewandelt werden, Folgendes umfasst:
das erste polarisierte Licht wird in dem mindestens einen dritten Bereich (310) in das dritte polarisierte Licht umgewandelt; und
das zweite polarisierte Licht wird in dem mindestens einen vierten Bereich (320) in das vierte polarisierte Licht umgewandelt,
wobei der mindestens eine dritte Bereich (310) insgesamt M dritte Pixel umfasst, der mindestens eine vierte Bereich (320) insgesamt N vierte Pixel umfasst, M größer oder gleich einer Menge des mindestens einen ersten Bereichs (210) ist und N größer oder gleich einer Menge des mindestens einen zweiten Bereichs (220) ist,
wobei die Phasenverzögerungsschicht ferner eine Flüssigkristallschicht (340) umfasst, die Flüssigkristallschicht (340) ein oder mehrere Flüssigkristallmoleküle umfasst, jedes der M dritten Pixel mindestens eines des einen oder der mehreren Flüssigkristallmoleküle umfasst und jedes der N vierten Pixel mindestens eines des einen oder der mehreren Flüssigkristallmoleküle umfasst, und
wobei das eine oder die mehreren Steuerungselemente dazu konfiguriert sind, eine Ablenkung des einen oder der mehreren Flüssigkristallmoleküle zu steuern, sodass das dritte polarisierte Licht beziehungsweise das vierte polarisierte Licht den dritten Polarisationszustand und den vierten Polarisationszustand umfassen.

2. Modul nach Anspruch 1, wobei der Polarisationsfilm (101, 200) mindestens einen ersten Bereich (210) und mindestens einen zweiten Bereich (220) umfasst, die abwechselnd angeordnet sind; das einfallende Licht in dem mindestens einen ersten Bereich (210) in das erste polarisierte Licht, das einen ersten Austrittswinkel aufweist, und das zweite polarisierte Licht, das einen zweiten Austrittswinkel aufweist, umgewandelt wird; und das einfallende Licht in dem mindestens einen zweiten Bereich (220) in das erste polarisierte Licht, das den zweiten Austrittswinkel aufweist, und das zweite polarisierte Licht, das den ersten Austrittswinkel aufweist, umgewandelt wird.

3. Modul nach Anspruch 1 oder 2, wobei der erste Polarisationszustand ein linkshändiger Polarisationszustand ist und der zweite Polarisationszustand ein rechtshändiger Polarisationszustand ist; oder der erste Polarisationszustand ein rechtshändiger Polarisationszustand ist und der zweite Polarisationszustand ein linkshändiger Polarisationszustand ist.

4. Modul nach einem der Ansprüche 1 bis 3, wobei der dritte Polarisationszustand einen linearen Polarisationszustand oder einen elliptischen Polarisationszustand umfasst und der vierte Polarisationszustand den linearen Polarisationszustand oder den elliptischen Polarisationszustand umfasst.

5. Modul nach einem der Ansprüche 1 bis 4, wobei die Phasenverzögerungsschicht ferner ein oberes Substrat (330) und ein unteres Substrat (350) umfasst und sich die Flüssigkristallschicht (340) zwischen dem oberen Substrat (330) und dem unteren Substrat (350) befindet.

6. Modul nach einem der Ansprüche 1 bis 5, wobei das eine oder die mehreren Steuerungselemente Dünnschichttransistoren TFTs sind und der TFT mindestens einen von einem amorphen Silizium-TFT, α-Si-TFT, einem polykristallinen Silizium-TFT mit Niedertemperatur, LTPS-TFT, und einem oxiden TFT, Oxid-TFT, umfasst.

7. Modul nach einem der Ansprüche 1 bis 6, wobei die Phasenverzögerungsschicht nahe einer Außenlichtseite des Polarisationsfilms angeordnet ist und ein Abstand d zwischen einer Innenlichtseite der Phasenverzögerungsschicht und der Außenlichtseite des Polarisationsfilms mit dem ersten Austrittswinkel oder dem zweiten Austrittswinkel assoziiert ist.

8. Modul nach einem der Ansprüche 1 bis 7, wobei das Modul auf eine Anzeigevorrichtung angewendet wird und zwischen einem Anzeigefeld und einer Rückbeleuchtungseinheit in der Anzeigevorrichtung angeordnet ist.

9. Modul nach Anspruch 8, wobei das Anzeigefeld ferner einen oder mehrere Farbfilter CF, einen oberen Polarisator und einen unteren Polarisator umfasst.

10. Rückbeleuchtungssteuerungsverfahren, umfassend:
Ermöglichen (410) von auf einen Polarisationsfilm einfallendem Licht, um ein erstes polarisiertes Licht, das einen ersten Polarisationszustand aufweist, und ein zweites polarisiertes Licht, das einen zweiten Polarisationszustand aufweist, zu erlangen; wobei der Polarisationsfilm (101, 200) mindestens einen ersten Bereich (210) und mindestens einen zweiten Bereich (220) umfasst, die abwechselnd angeordnet sind; und
Ermöglichen (420), dass das erste polarisierte Licht und das zweite polarisierte Licht auf eine Phasenverzögerungsschicht einfallen, um ein drittes polarisiertes Licht, das einen dritten Polarisationszustand aufweist, und ein viertes polarisiertes Licht, das einen vierten Polarisationszustand aufweist, zu erlangen, wobei
sich der erste Polarisationszustand von dem zweiten Polarisationszustand unterscheidet; und
die Phasenverzögerungsschicht eine Steuerungsschicht umfasst und die Steuerungsschicht ein oder mehrere Steuerungselemente umfasst, wobei das eine oder die mehreren Steuerungselemente dazu konfiguriert sind, die Phasenverzögerungsschicht zu steuern, um das erste polarisierte Licht und das zweite polarisierte Licht in das dritte polarisierte Licht und das vierte polarisierte Licht umzuwandeln,
wobei die Phasenverzögerungsschicht mindestens einen dritten Bereich und mindestens einen vierten Bereich umfasst, die abwechselnd angeordnet sind, und der Umstand, dass das erste polarisierte Licht und das zweite polarisierte Licht in ein drittes polarisiertes Licht, das einen dritten Polarisationszustand aufweist, und ein viertes polarisiertes Licht, das einen vierten Polarisationszustand aufweist, umgewandelt werden, Folgendes umfasst:
das erste polarisierte Licht wird in dem mindestens einen dritten Bereich in das dritte polarisierte Licht umgewandelt; und
das zweite polarisierte Licht wird in dem mindestens einen vierten Bereich in das vierte polarisierte Licht umgewandelt,
wobei der mindestens eine dritte Bereich insgesamt M dritte Pixel umfasst, der mindestens eine vierte Bereich insgesamt N vierte Pixel umfasst, M größer oder gleich einer Menge des mindestens einen ersten Bereichs ist und N größer oder gleich einer Menge des mindestens einen zweiten Bereichs ist,
wobei die Phasenverzögerungsschicht ferner eine Flüssigkristallschicht umfasst, die Flüssigkristallschicht ein oder mehrere Flüssigkristallmoleküle umfasst, jedes der M dritten Pixel mindestens eines des einen oder der mehreren Flüssigkristallmoleküle umfasst und jedes der N vierten Pixel mindestens eines des einen oder der mehreren Flüssigkristallmoleküle umfasst, und
wobei das eine oder die mehreren Steuerungselemente dazu konfiguriert sind, eine Ablenkung des einen oder der mehreren Flüssigkristallmoleküle zu steuern, sodass das dritte polarisierte Licht beziehungsweise das vierte polarisierte Licht den dritten Polarisationszustand und den vierten Polarisationszustand umfassen.

11. Verfahren nach Anspruch 10, wobei der Polarisationsfilm mindestens einen ersten Bereich und mindestens einen zweiten Bereich umfasst, die abwechselnd angeordnet sind;
das einfallende Licht in dem mindestens einen ersten Bereich in das erste polarisierte Licht, das einen ersten Austrittswinkel aufweist, und das zweite polarisierte Licht, das einen zweiten Austrittswinkel aufweist, umgewandelt wird; und
das einfallende Licht in dem mindestens einen zweiten Bereich in das erste polarisierte Licht, das den zweiten Austrittswinkel aufweist, und das zweite polarisierte Licht, das den ersten Austrittswinkel aufweist, umgewandelt wird.

12. Verfahren nach Anspruch 10 oder 11, wobei der erste Polarisationszustand ein linkshändiger Polarisationszustand ist und der zweite Polarisationszustand ein rechtshändiger Polarisationszustand ist; oder der erste Polarisationszustand ein rechtshändiger Polarisationszustand ist und der zweite Polarisationszustand ein linkshändiger Polarisationszustand ist.

13. Verfahren nach einem der Ansprüche 10 bis 12, wobei die Phasenverzögerungsschicht ferner ein oberes Substrat und ein unteres Substrat umfasst und sich die Flüssigkristallschicht zwischen dem oberen Substrat und dem unteren Substrat befindet.

14. Anzeigevorrichtung, wobei die Anzeigevorrichtung ein Anzeigefeld und das optische Modul nach einem der Ansprüche 1 bis 9 umfasst.

15. Fahrzeug, wobei das Fahrzeug die Anzeigevorrichtung nach Anspruch 14 umfasst.

## Revendications

1. Module optique comprenant :
un film de polarisation (101, 200), configuré pour convertir la lumière incidente en une première lumière polarisée ayant un premier état de polarisation et une deuxième lumière polarisée ayant un deuxième état de polarisation ; dans lequel le film de polarisation (101, 200) comprend au moins une première région (210) et au moins une deuxième région (220) qui sont agencées en alternance ; et
une couche de retard de phase (102, 300), dans lequel la couche de retard de phase (102, 300) comprend une couche de commande (360), la couche de commande (360) comprend un ou plusieurs éléments de commande, et les un ou plusieurs éléments de commande sont configurés pour commander la couche de retard de phase (102, 300) pour convertir la première lumière polarisée et la deuxième lumière polarisée en une troisième lumière polarisée ayant un troisième état de polarisation et une quatrième lumière polarisée ayant un quatrième état de polarisation, dans lequel le premier état de polarisation est différent du deuxième état de polarisation,
dans lequel la couche de retard de phase (102, 300) comprend au moins une troisième région (310) et au moins une quatrième région (320) qui sont agencées en alternance, et que la première lumière polarisée et la deuxième lumière polarisée sont converties en une troisième lumière polarisée ayant un troisième état de polarisation et une quatrième lumière polarisée ayant un quatrième état de polarisation comprend :
la première lumière polarisée est convertie en la troisième lumière polarisée dans l'au moins une troisième région (310) ; et
la deuxième lumière polarisée est convertie en la quatrième lumière polarisée dans l'au moins une quatrième région (320),
dans lequel l'au moins une troisième région (310) comprend M troisièmes pixels au total, l'au moins une quatrième région (320) comprend N quatrièmes pixels au total, M est supérieur ou égal à une quantité de l'au moins une première région (210), et N est supérieur ou égal à une quantité de l'au moins une deuxième région (220),
dans lequel la couche de retard de phase comprend également une couche de cristaux liquides (340), la couche de cristaux liquides (340) comprend une ou plusieurs molécules de cristaux liquides, chacun des M troisièmes pixels comprend au moins l'une des une ou plusieurs molécules de cristaux liquides, et chacun des N quatrièmes pixels comprend au moins l'une des une ou plusieurs molécules de cristaux liquides, et
dans lequel les un ou plusieurs éléments de commande sont configurés pour commander la déviation des une ou plusieurs molécules de cristaux liquides, de sorte que la troisième lumière polarisée et la quatrième lumière polarisée comprennent respectivement le troisième état de polarisation et le quatrième état de polarisation.

2. Module selon la revendication 1, dans lequel le film de polarisation (101, 200) comprend au moins une première région (210) et au moins une deuxième région (220) qui sont agencées en alternance ;
dans l'au moins une première région (210), la lumière incidente est convertie en la première lumière polarisée ayant un premier angle d'émergence et en la deuxième lumière polarisée ayant un second angle d'émergence ; et
dans l'au moins une deuxième région (220), la lumière incidente est convertie en la première lumière polarisée ayant le second angle d'émergence et en la deuxième lumière polarisée ayant le premier angle d'émergence.

3. Module selon la revendication 1 ou 2, dans lequel le premier état de polarisation est un état de polarisation gauche, et le deuxième état de polarisation est un état de polarisation droite ; ou le premier état de polarisation est un état de polarisation droite, et le deuxième état de polarisation est un état de polarisation gauche.

4. Module selon l'une quelconque des revendications 1 à 3, dans lequel le troisième état de polarisation comprend un état de polarisation linéaire ou un état de polarisation elliptique, et le quatrième état de polarisation comprend l'état de polarisation linéaire ou l'état de polarisation elliptique.

5. Module selon l'une quelconque des revendications 1 à 4, dans lequel la couche à retard de phase comprend également un substrat supérieur (330) et un substrat inférieur (350), et la couche de cristaux liquides (340) est située entre le substrat supérieur (330) et le substrat inférieur (350).

6. Module selon l'une quelconque des revendications 1 à 5, dans lequel les un ou plusieurs éléments de commande sont des transistors à couches minces TFT, et le TFT comprend au moins l'un d'un silicium amorphe α-Si-TFT, d'un silicium polycristallin basse température LTPS-TFT, et d'un oxyde Oxide-TFT.

7. Module selon l'une quelconque des revendications 1 à 6, dans lequel la couche à retard de phase est disposée à proximité d'un côté de lumière extérieure du film de polarisation, et une distance d entre un côté de lumière intérieure de la couche à retard de phase et le côté de lumière extérieure du film de polarisation est associée au premier angle d'émergence ou au second angle d'émergence.

8. Module selon l'une quelconque des revendications 1 à 7, dans lequel le module est appliqué à un appareil d'affichage, et est disposé entre un panneau d'affichage et une unité de rétroéclairage dans l'appareil d'affichage.

9. Module selon la revendication 8, dans lequel le panneau d'affichage comprend également l'un ou plusieurs d'un filtre couleur CF, d'un polariseur supérieur, et d'un polariseur inférieur.

10. Procédé de commande de rétroéclairage, comprenant :
l'activation (410), de la lumière incidente sur un film de polarisation, pour obtenir la première lumière polarisée ayant un premier état de polarisation et une deuxième lumière polarisée ayant un deuxième état de polarisation ; dans lequel le film de polarisation (101, 200) comprend au moins une première région (210) et au moins une deuxième région (220) qui sont agencées en alternance ; et
l'activation (420), de la première lumière polarisée et de la deuxième lumière polarisée pour être incidentes sur une couche de retard de phase, pour obtenir une troisième lumière polarisée ayant un troisième état de polarisation et une quatrième lumière polarisée ayant un quatrième état de polarisation, dans lequel le premier état de polarisation est différent du deuxième état de polarisation ; et
la couche de retard de phase comprend une couche de commande, et la couche de commande comprend un ou plusieurs éléments de commande, dans lequel les un ou plusieurs éléments de commande sont configurés pour commander la couche de retard de phase afin de convertir la première lumière polarisée et la deuxième lumière polarisée en la troisième lumière polarisée et la quatrième lumière polarisée,
dans lequel la couche de retard de phase comprend au moins une troisième région et au moins une quatrième région qui sont agencées en alternance, et que la première lumière polarisée et la deuxième lumière polarisée sont converties en une troisième lumière polarisée ayant un troisième état de polarisation et une quatrième lumière polarisée ayant un quatrième état de polarisation comprend :
la première lumière polarisée est convertie en la troisième lumière polarisée dans l'au moins une troisième région ; et
la deuxième lumière polarisée est convertie en la quatrième lumière polarisée dans l'au moins une quatrième région,
dans lequel l'au moins une troisième région comprend M troisièmes pixels au total, l'au moins une quatrième région comprend N quatrièmes pixels au total, M est supérieur ou égal à une quantité de l'au moins une première région, et N est supérieur ou égal à une quantité de l'au moins une deuxième région,
dans lequel la couche de retard de phase comprend également une couche de cristaux liquides, la couche de cristaux liquides comprend une ou plusieurs molécules de cristaux liquides, chacun des M troisièmes pixels comprend au moins l'une des une ou plusieurs molécules de cristaux liquides, et chacun des N quatrièmes pixels comprend au moins l'une des une ou plusieurs molécules de cristaux liquides, et
dans lequel les un ou plusieurs éléments de commande sont configurés pour commander la déviation des une ou plusieurs molécules de cristaux liquides, de sorte que la troisième lumière polarisée et la quatrième lumière polarisée comprennent respectivement le troisième état de polarisation et le quatrième état de polarisation.

11. Procédé selon la revendication 10, dans lequel le film de polarisation comprend au moins une première région et au moins une deuxième région qui sont agencées en alternance ;
dans l'au moins une première région, la lumière incidente est convertie en la première lumière polarisée ayant un premier angle d'émergence et en la deuxième lumière polarisée ayant un second angle d'émergence ; et
dans l'au moins une deuxième région, la lumière incidente est convertie en la première lumière polarisée ayant le second angle d'émergence et en la deuxième lumière polarisée ayant le premier angle d'émergence.

12. Procédé selon la revendication 10 ou 11, dans lequel le premier état de polarisation est un état de polarisation gauche, et le deuxième état de polarisation est un état de polarisation droite ; ou le premier état de polarisation est un état de polarisation droite, et le deuxième état de polarisation est un état de polarisation gauche.

13. Procédé selon l'une quelconque des revendications 10 à 12, dans lequel la couche de retard de phase comprend également un substrat supérieur et un substrat inférieur, et la couche de cristaux liquides est située entre le substrat supérieur et le substrat inférieur.

14. Appareil d'affichage, dans lequel l'appareil d'affichage comprend un panneau d'affichage et le module optique selon l'une quelconque des revendications 1 à 9.

15. Véhicule, dans lequel le véhicule comprend l'appareil d'affichage selon la revendication 14.
